(19) Europäisches Patentamt
European Patent Office
Office européen des brevets

(11) Veröffentlichungsnummer: **0 219 742 B1**

(12) **EUROPÄISCHE PATENTSCHRIFT**

(45) Veröffentlichungstag der Patentschrift: **27.09.89**

(51) Int. Cl.[4]: **C 08 K 5/12**, G 01 N 27/30

(21) Anmeldenummer: **86113630.7**

(22) Anmeldetag: **02.10.86**

# (54) Kunststoff-Formkörper mit hoher Elastizität und Haftfähigkeit und deren Verwendung.

(30) Priorität: **04.10.85 CH 4306/85**

(43) Veröffentlichungstag der Anmeldung: **29.04.87 Patentblatt 87/18**

(45) Bekanntmachung des Hinweises auf die Patenterteilung: **27.09.89 Patentblatt 89/39**

(84) Benannte Vertragsstaaten: **AT BE CH DE ES FR GB IT LI LU NL SE**

(56) Entgegenhaltungen:
**US-A- 3 389 168**

**PATENTS ABSTRACTS OF JAPAN, Band 8, Nr. 178 (C-238)[1615], 16. August 1984; & JP-A-59 74 144 (TERUMO K.K.) 26-04-1984**

(73) Patentinhaber: **Willi Möller AG, Gubelstrasse 37, CH-8050 Zürich (CH)**

(72) Erfinder: **Simon, Wilhelm, Rütistrasse 32, CH-8702 Zollikon (CH)**
Erfinder: **Oesch, Urs, Seefeldstrasse 8, CH-8610 Uster (CH)**

(74) Vertreter: **Blum, Rudolf Emil Ernst et al, c/o E. Blum & Co Patentanwälte Vorderberg 11, CH-8044 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

*Hintergrund der Erfindung*

Die vorliegende Erfindung betrifft Kunststoff-Formkörper mit hoher Elastizität und Haftfähigkeit. Diese Formkörper, wie zum Beispiel Folien, können auf einem Substrat, beispielsweise einem Silizium enthaltenden Substrat, aufgrund ihrer hohen Haftfähigkeit dauerhaft befestigt werden. Die Kunststoff-Formkörper enthalten hohe Mengen eines Benzophenon-tetracarbonsäure-tetraesters als elastifizierende Komponente, und zwar üblicherweise in Mengen von 15 - 90 Gewichtsteilen dieser elastifizierenden Komponente pro 10 Gewichtsteile des Kunststoffmaterials. Gemäss einer bevorzugten Ausführungsart sind diese hochelastischen Kunststoff-Formkörper entsprechende ionenselektive Membranen, die als weitere Komponente einen ionenselektiven Bestandteil enthalten.

*Beschreibung des Standes der Technik*

Es ist allgemein bekannt, Weichmacher einzusetzen, um spröde Kunststoffe oder zu wenig biegbare Kunststoffe für verschiedene Einsatzgebiete geeignet zu machen.

Es ist ferner bekannt, in ionenselektiven Membranen zur Bestimmung der Konzentration von Ionen eine ionenselektive Komponente für das zu bestimmende Kation oder Anion in einer Kunststoffmatrix einzusetzen. Derartige ionenselektive Membranen enthalten im allgemeinen ausserdem einen Weichmacher, der unter anderem dazu dient, die Elektrodenstabilität von Elektroden, die als ionenempfindlichen Teil derartiger Membranen dienen, zu erhöhen und die Empfindlichkeit der Membranen zu steigern. Typische Beispiele für Weichmacher, die bisher in ionenempfindlichen Membranen eingesetzt wurden, sind die Ester von Dicarbonsäuren, wie zum Beispiel Ester der Phthalsäure, der Sebacinsäure oder der Adipinsäure, sowie ferner aromatische Äther, aliphatische Äther und Ester der Phosphorsäure, wie zum Beispiel gemischte aromatische und aliphatische Phosphorsäureester.

In den am 29. Januar 1982 veröffentlichten japanischen Patentveröffentlichungen Nr. 17 851/1982 und 17 852/1982 von Fuji werden beispielsweise unter anderem für Kaliumionen selektive Elektroden beschrieben, die als ionenselektive Komponente das Valinomycin, als Matrix Polyvinylchlorid und als Weichmacher Dioctyl-phthalat enthalten.

Ferner werden in der europäischen Patentveröffentlichung 0 129 233 der Eastman Kodak Company entsprechende gegenüber Kaliumionen selektive Membranen beschrieben, die als ionenselektive Komponente Valinomycin, als Matrix einen Kunststoff, vorzugsweise ein hydrophobes Polymer, beispielsweise ein Copolymer aus Vinylchlorid und Vinylacetat, und als Weichmacher einen Diester einer Dicarbonsäure mit mindestens 25 Kohlenstoffatomen und einer Viskosität von weniger als 120 mPa.s bei 20°C, sowie einen Siedepunkt von mehr als 170° bei einem Druck von 5 mm Hg (666 Pa) enthalten. Der Weichmacher ist in einer solchen Menge anwesend, dass das Valinomycin darin löslich ist, wobei häufig ein 100- bis 500%iger Überschuss an diesem Weichmacher eingesetzt wird und als bevorzugter Weichmacher wird das Diisodecylphthalat erwähnt.

In der USA Patentschrift Nr. 3 389 168 von J.W. Hirzy werden Diallyl-benzophenon-tetra-carbonsäureester beschrieben, welche die folgende Formel

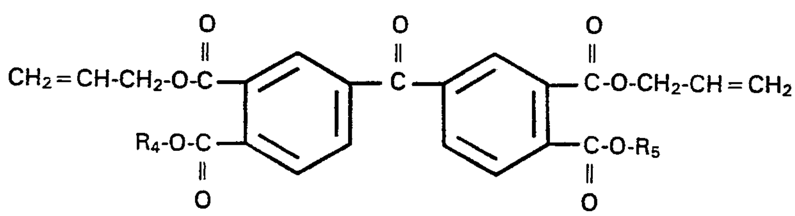

aufweisen, in welcher

$R_4$ und $R_5$ Allylgruppen, Alkylgruppen mit 1 - 18 Kohlenstoffatomen oder Cycloalkylgruppen mit 6 bis 18 Kohlenstoffatomen sind. Diese Benzophenon-tetracarbonsäuretetraester, in denen mindestens zwei der Ester bildenden Alkoholgruppen nur drei Kohlenstoffatome aufweisen, nämlich die beiden Allylgruppen, werden als Weichmacher und Vernetzungsmittel für Halogen enthaltende Polymere eingesetzt. Gemäss den Beispielen 16 und 17 dieses Patentes werden pro 100 Gewichtsteile an Polyvinylchlorid 60 Gewichtsteile dieser Weichmacher verwendet.

In der japanischen Patentveröffentlichung Nr. 59-74,144 von Kokai Tokkyo Koho und in dem entsprechenden japanischen Patentabstracts, Band 8, Nr. 178 (C-338) (1615), 6. August 1984, werden Weichmacher für Vinylchloridpolymere beschrieben, welche die folgende Formel A

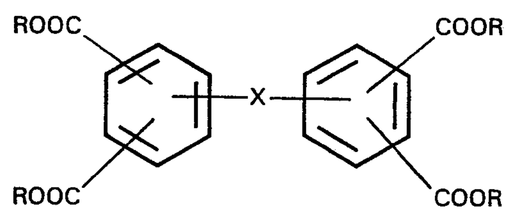

(A)

aufweisen, worin R ein gesättigter aliphatischer Kohlenwasserstoffrest mit 4 - 8 Kohlenstoffatomen ist und

X ein Sauerstoffatom, ein Schwefelatom, eine Gruppe der Formel

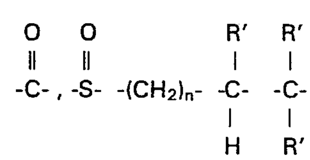

worin n 1 - 6 ist und R' für eine Methylgruppe oder eine Trifluormethylgruppe steht, bedeutet oder

X die Bedeutung bestimmter zweiwertiger organischer Reste besitzt, die über je eine Äthergruppierung an die beiden Benzolkerne gebunden sind. Pro 100 Gew.-Teile des Vinylchloridkunststoffes müssen in diesem Falle 20 - 120 Gew.-Teile, vorzugsweise 30 - 100 Gew.-Teile, des Tetracarbonsäuretetraesters der Formel A verwendet werden.

Die entsprechenden weichgemachten Produkte erwiesen sich vorteilhaft als Aufbewahrungsmaterial für Blut, weil so eine geringe Ausschwitzung des Weichmachers in das aufbewahrte Blut festgestellt werden konnte. Der fraglichen japanischen Patentveröffentlichung ist kein Hinweis zu entnehmen, dass die entsprechenden weichgemachten Polyvinylchloridharze eine gute Haftfähigkeit und eine hohe Elastizität besitzen.

Es wurde jetzt überraschenderweise festgestellt, dass Benzophenontetracarbonsäureester, unter anderem auch solche, die der oben genannten Formel A entsprechen, sofern in dieser X die Gruppierung -COist, geeignet sind, Kunststoff-Formkörper eine hohe Elastizität und Haftfähigkeit zu verleihen, sofern sie in Mengen eingesetzt werden, die wesentlich höher sind, als dies bisher für Weichmacher in Kunststoffen der Fall war.

*Beschreibung der Erfindung*

Ein Gegenstand der vorliegenden Erfindung ist daher ein Kunststoff-Formkörper mit hoher Elastizität und Haftfähigkeit, der dadurch gekennzeichnet ist, dass er pro 10 Gew.-Teile Kunststoff 7 Gew.-Teile bis zu 90 Gew.-Teile einer elastifizierenden Komponente enthält, die ein Benzophenontetracarbonsäure-tetraester ist, in welchem die veresternden Alkoholkomponenten Alkanole, Alkenole oder Alkinole mit 4 - 24 Kohlenstoffatomen sind und wobei der Benzophenontetracarbonsäureester in den aromatischen Ringen oder in den Resten der Alkoholkomponenten gegebenenfalls nicht ionische Substituenten trägt, unter der Voraussetzung, dass dann, wenn der Kunststoff ein Vinylchloridhomopolymerisat oder Vinylchloridcopolymerisat enthält oder daraus besteht, pro 10 Gew.-Teile Kunststoff mehr als 12 Gew.-Teile des Benzophenontetracarbonsäure-tetraesters enthalten sind.

Bevorzugte Benzophenontetracarbonsäure-tetraester, die als Weichmacher in den erfindungsgemässen Kunststoff-Formkörpern eingesetzt werden, sind solche, in denen die Alkoholkomponente des Tetraesters ein geradkettiger Alkohol oder ein nur eine einzige oder höchstens zwei Verzweigungsstellen aufweisender Alkohol ist. In den Benzophenontetracarbonsäure-tetraestern trägt vorzugsweise jeder der beiden Benzolringe zwei Estergruppierungen, wobei solche Ester speziell bevorzugt sind, in welchen in beiden Benzolkernen die Anordnung der Estergruppierungen, bezogen auf die Carbonylgruppe des Benzophenones, identisch ist.

Speziell bevorzugt werden in den erfindungsgemässen Formkörpern als Benzophenoncarbonsäuretetraester solche der Formel I

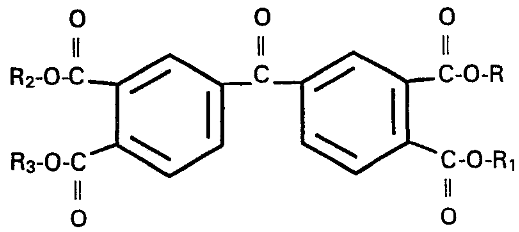

(I)

eingesetzt, in welchen jeder der Reste

R, $R_1$, $R_2$ und $R_3$ ein Alkylrest, Alkenylrest oder Alkinylrest mit 4 - 22 Kohlenstoffatomen, vorzugsweise 6 - 20 Kohlenstoffatomen, und speziell bevorzugt 9 - 19 Kohlenstoffatomen ist. Vorzugsweise sind diese Reste geradkettige Reste oder sie weisen höchstens eine Verzweigungsstelle auf.

Aufgrund der Symmetrie des Molekülaufbaues und auch wegen der leichteren Herstellbarkeit sind solche Benzophenontetracarbonsäureester bevorzugt, in denen die vier Estergruppierungen die gleiche Struktur besitzen. Bei den bevorzugten Benzophenoncarbonsäureestern der oben angegebenen Formel I bedeutet dies, dass in dieser Formel die Reste R, $R_1$, $R_2$ und $R_3$ miteinander identisch sind.

Die Kunststoffkomponente der erfindungsgemässen Formkörper ist vorzugsweise ein hydrophober Kunststoff und als Beispiele für verwendbare Kunststoffe seien genannt: Polyäthylen, Polypropylen, Polyvinylhalogenide, Polystyrol, Polyester, Polyamide, Polymethacrylnitril, Polyacrylnitril, Polyurethane, Polycarbonate, Polyvinylidenhalogenide, relativ hydrophobe Zellulosederivate oder Copolymerisate aus zwei oder mehr Monomereinheiten. In entsprechenden Copolymeristen können gegebenenfalls auch geringere Anteile an stärker hydrophilen Monomerkomponenten enthalten sein, wie zum Beispiel Monomereinheiten, die als Substituenten Hydroxylgruppen, niedere aliphatische Äther oder Estergruppierungen und gegebenenfalls sogar Carboxylgruppen in geringen Anteilen tragen, wobei als Beispiele für derartige Monomereinheiten Vinylalkohol oder Vinylacetat genannt seien.

In den Monomereinheiten der Polymermaterialien können ferner irgendwelche hydrophobe Substituenten enthalten sein, wie zum Beispiel Alkylgruppen, wenn beispielsweise Vinyltoluol als Monomermaterial oder Monomerkomponente eingesetzt wird.

Die Polymermaterialien können ferner auch noch ungesättigte Gruppierungen aufweisen, und beispielsweise in der Polymerkette Alkingruppen oder Alkengruppen tragen, wie dies der Fall ist, wenn ein Dien, beispielsweise Butadien, als Monomerkomponente eingesetzt wird.

Als Vinylhalogenide, bzw. Vinylidenhalogenide können in den Copolymerisaten, bzw. Homopolymerisaten entsprechende Bromide oder Fluoride eingesetzt werden, bevorzugt sind jedoch die Chloride.

Ein speziell bevorzugter Kunststoff der erfindungsgemässen Formkörper ist ein Polymermaterial, das ein Vinylchloridhomopolymerisat oder Vinylchloridcopolymerisat enthält oder daraus besteht.

Wie bereits weiter oben erläutert wurde, ist es zur Erzielung der Elastizität und der Haftfähigkeit der erfindungsgemässen Kunststoff-Formkörper wichtig, dass dann, wenn der Kunststoff dieses Formkörpers

ein Vinylchloridpolymer oder Vinylchloridcopolymer ist, pro 10 Gew.-Teile dieses Kunststoffes mehr als 12 Gew.-Teile des Benzophenontetracarbonsäure-tetraesters vorhanden sind. Vorzugsweise enthalten derartige Formkörper pro 10 Gew.-Teile des Polyvinylchlorides 15 - 90 Gew.-Teile, und speziell bevorzugt 20 - 70 Gew.-Teile des Benzophenontetracarbonsäure-tetraesters.

Es ist wesentlich, dass die erfindungsgemässen Formkörper derartig hohe Gehalte an den elastifizierenden Komponenten enthalten. Wenn nämlich ein Polyvinylchloridformkörper pro 10 Gew.-Teile des Polyvinylchlorides weniger als 12 Gew.-Teile an dem Benzophenontetracarbonsäure-tetraester enthält, dann wird zwar eine Weichmachung des Polyvinylchloridformkörpers erreicht, der entsprechende Formkörper weist jedoch nicht die unerwartet hohe Elastizität und gute Haftfähigkeit auf verschiedenen Substraten auf. Das gleiche trifft zu, wenn ein Formkörper aus einem andern Kunststoffmaterial als Polyvinylchlorid pro 10 Gew.-Teile des Kunststoffes, weniger als 7 Gew.-Teile des als Elastifizierungsmittel wirkenden Benzophenontetracarbonsäure-tetraesters enthält.

Die erfindungsgemässen Formkörper mit dem erwähnten ausserordentlich hohen Gehalt an dem elastifizierend wirkenden Benzophenontetracarbonsäure-tetraester weisen gute Haftfähigkeiten auf verschiedenen Kunststoffsubstraten, beispielsweise Substraten aus Poly(methylmethacrylat) oder Poly(vinylchlorid) auf und ebenfalls auf Silizium enthaltenden Substraten,wie zum Beispiel Substraten aus Glas, aus Quarzglas, aus silanisiertem Glas, aus Silikon oder Substraten aus Siliziumnitrid der Formel $Si_3N_4$.

Vorzugsweise enthalten die erfindungsgemässen Kunststoff-Formkörper, und zwar sowohl solche, in denen der Kunststoff Polyvinylchlorid ist als auch solche, in denen der Kunststoff irgend ein anderer verwendbarer Kunststoff ist, pro 10 Gew.-Teile des Kunststoffes, 15 - 80 Gew.-Teile des elastifizierenden Benzophenontetracarbonsäure-tetraesters, und speziell bevorzugt werden pro 10 Gew.-Teile des Kunststoffes, 20 - 70 Gew.-Teile des Benzophenontetracarbonsäure-tetraesters eingesetzt.

Wenn als Kunststoff ein Vinylchloridhomopolymerisat oder -copolymerisat verwendet wird, dann werden besonders gute Ergebnisse bezüglich der Haftfähigkeit und der Elastizität erzielt, wenn pro 10 Gew.-Teile an Kunststoff, 20 - 30 Gew.-Teile des Benzophenontetracarbonsäure-tetraesters eingesetzt werden. Als Beispiel hiefür sei eine Mischung aus 30 Gew.-% Polyvinylchlorid plus 70 Gew.-% des Benzophenontetracarbonsäure-tetraesters erwähnt.

Erfindungsgemässe Kunststoff-Formkörper, die pro 10 Gew.-Teile an Kunststoff mehr als 90 Gew.-Teile des Benzophenontetracarbonsäure-tetraesters enthalten, besitzen im allgemeinen bei Zimmertemperatur oder Temperatur, die knapp oberhalb der Zimmertemperatur liegen, beispielsweise 40°C, nicht mehr die entsprechende Formstabilität und sie beginnen zu fliessen. Diese Obergrenze an elastifizierender Komponente, die nicht überschritten werden soll, variiert mit dem eingesetzten Kunststoff und kann in manchen Fällen schon bei 70 - 80 Gew.-Teilen der elastifizierenden Komponente pro 10 Gew.-Teile des Kunststoffes liegen.

Ein wesentlicher Vorteil der in den erfindungsgemässen Kunststoff-Formkörpern als elastifizierende Komponente eingesetzten Benzophenontetracarbonsäure-tetraester, im Vergleich zu bisher in Kunststoffen allgemein verwendeten Weichmachern, beispielsweise Estern von Dicarbonsäuren, wie zum Beispiel Estern der Phthalsäure, der Sebacinsäure oder der Adipinsäure, und auch im Vergleich zu Estern der Phosphorsäure, besteht in der stark verminderten Wanderung der erfindungsgemässen Benzophenontetracarbonsäure-tetraester in der Kunststoffmatrix. Diese verminderte Wanderung oder Migration führt ausserdem zu einer drastisch verminderten Auslaugbarkeit des Benzophenontetracarbonsäure-tetraesters aus dem Kunststoff durch verschiedene Lösungsmittelsysteme, insbesondere wässrige Lösungsmittelsysteme. So konnte gezeigt werden, dass aus einer Membran auf Basis von 30 Gew.-Teilen Polyvinylchlorid plus 70 Gew.-Teilen elastifizierender Komponente oder Weichmacher, dieser Bestandteil praktisch nicht ausgelaugt wird, wenn die entsprechende Membran mit einer Albuminlösung während mehrerer Tage in Kontakt gehalten wird, falls als plastifizierende Komponente ein Benzophenontetracarbonsäure-tetraester eingesetzt wird, während bei Verwendung eines entsprechenden Sebacinsäureesters unter den gleichen Bedingungen fast 90% des ursprünglich vorhandenen Weichmachers ausgelaugt werden.

Diese extrem geringe Auslaugbarkeit der in den erfindungsgemässen Kunststoff-Formkörpern eingesetzten elastifizierenden Komponente ist dann von ausschlaggebender Bedeutung, wenn der Kunststoff-Formkörper während seiner Verwendung mit irgendwelchen flüssigen Materialien, beispielsweise wässrigen Lösungen, in Berührung steht, wie dies der Fall ist, wenn beispielsweise entsprechende folienförmige Kunststoff-Formkörper oder ein Film des elastifizierenden Kunststoffes zu Verpackungszwecken eingesetzt wird. Erfindungsgemmässe Formkörper in Form eines Filmes oder einer Folie sind gut geeignet um feuchte Produkte, wie zum Beispiel Nahrungsmittel oder Getränke zu verpacken. Ferner werden erfindungsgemässe Formkörper in Form von Fäden, Strängen oder Filamenten mit Vorteil in solchen Einsatzgebieten verwendet, wo sie mit flüssigen Medien, beispielsweise wässrigen Medien, in Berührung kommen.

Bevorzugte erfindungsgemässe Formkörper sind solche, die in Form einer Folie, eines Stranges, eines Fadens oder eines Filaments vorliegen.

Gemäss einer bevorzugten Ausführungsart der vorliegenden Erfindung ist der erfindungsgemässe Kunststoff-Formkörper mit hoher Elastizität und Haftfähigkeit eine ionenempfindliche Membran zur Bestimmung der Konzentration von Ionen. Derartige ionenselektive Membranen enthalten als weiteren Bestandteil eine ionenempfindliche Komponente zur Bestimmung der Konzentration der entsprechenden Kationen oder Anionen. Wie bereits oben erläutert wurde, werden die in diesen ionenempfindlichen Membranen enthaltenen Benzophenontetracarbon-

säure-tetraester nicht ausgelaugt, wenn derartige Membranen häufig in Berührung mit wässrigen Medien stehen, wie zum Beispiel mit Körperflüssigkeiten, wenn derartige Membranen im klinischen Bereich eingesetzt werden. Ionenempfindliche Membranen, welche die Benzophenontetracarbonsäuretetraester als elastifizierende Komponente enthalten, weisen dementsprechend, im Vergleich zu ionenempfindlichen Membranen, die bisher bekannte Weichmacher enthalten, wie zum Beispiel Ester von Dicarbonsäuren, eine stark verlängerte Lebensdauer auf.

Bevorzugte erfindungsgemässe ionenempfindliche Membranen enthalten als Kunststoff Polyvinylchlorid und diese ionenempfindlichen Membranen enthalten vorzugsweise pro 10 Gew.-Teile an dem Polyvinylchlorid 15 - 90 Gew.-Teile, vorzugsweise 20 - 70 Gew.-Teile, an dem Benzophenontetracarbonsäure-tetraester und ferner 0,1 - 1 Gew.-Teile an der ionenselektiven Komponente zur Bestimmung des vorgesehenen Kations oder Anions.

Ein weiterer Gegenstand der vorliegenden Erfindung ist die Verwendung der erfindungsgemässen Kunststoff-Formkörper mit hoher Elastizität und Haftfähigkeit zur Erzeugung einer haftenden Bindung zwischen dem Kunststoff-Formkörper und einem Substrat. Diese Verwendung ist dadurch gekennzeichnet, dass man den elastischen haftfähigen Kunststoff-Formkörper durch Anpressen an einem Substrat befestigt oder dass man eine Lösung der Komponenten des Kunststoff-Formkörpers in einem organischen Lösungsmititel auf ein Substrat aufträgt, wobei nach dem Abdampfen des Lösungsmittels eine auf dem Substrat haftende Schicht des Formkörpers mit hoher Elastizität vorliegt.

Die erfindungsgemässen Kunststoff-Formkörper können also durch einfaches Aufpressen an einem Substrat befestigt werden. Es ist ferner möglich, die fraglichen Kunststoff-Formkörper, die beispielsweise die Form eines niedrigen quadratischen Prismas oder eines niedrigen Zylinders aufweisen können, durch Aufpressen auf einem ersten Substrat zu befestigen und dann auf diesen befestigten Formkörper ein zweites Substrat aufzupressen, so dass eine haftende Verbindung zwischen dem ersten Substrat und dem zweiten Substrat erzeugt wird. Derartige Formkörper können also beispielsweise dazu verwendet werden, um Produkte wie Blätter aus Papier, Karton oder Kunststoff auf Substraten wie Holz, Metall, Glas, gestrichenen Wänden, Tapeten, etc. zu befestigen.

Bevorzugte erfindungsgemässe Formkörper sind solche, die in Form einer elastischen Folie oder eines elastischen Blattes vorliegen. Es ist dabei möglich, dünne Folien durch Vergiessen einer Lösung, die den Kunststoff und die elastifizierende Komponente enthält, herzustellen. Beispielsweise kann eine Lösung aus 10 Gew.-Teilen Polyvinylchlorid und 30 Gew.-Teilen Benzophenontetracarbonsäure-tetraester in einer ausreichenden Menge an Lösungsmittel, beispielsweise Tetrahydrofuran, unter Anwendung von üblichen Vergiesstechniken vergossen werden und man kann so erfindungsgemässe folienförmige Kunststoff-Formkörper herstellen, die Dicken im Bereich von 3 µm bis 200 µm aufweisen. Derartige Folien sind sehr klebrig, haben eine hohe Elastizität und eine hohe Haftfähigkeit auf verschiedenen Substraten, wie zum Beispiel Silizium enthaltenden Substraten oder Kunststoffmaterialien, beispielsweise Poly(methylmethacrylat) oder Polyvinylchlorid.

Erfindungsgemässe Formkörper in Form von Blättern oder Folien besitzen eine hohe Elastizität und gleichzeitig vorteilhafte mechanische Eigenschaften, insbesondere eine hohe Reissfestigkeit. Entsprechende haftfähige elastische, folienförmige Kunststoff-Formkörper können in ungedehntem Zustand auf ein Substrat aufgebracht werden, wobei eine gute Haftfähigkeit erreicht wird. Ferner ist es möglich, entsprechende elastische folienförmige Kunststoff-Formkörper auf die Oberfläche eines Substrates in gedehntem Zustand aufzubringen, wobei angenommen werden kann, dass durch die elastischen Rückstellkräfte der gedehnten Folie die Haftfestigkeit auf dem Substrat noch mehr erhöht wird. In beiden Fällen erhält man jedenfalls auf dem Substrat eine dauerhafte Haftung der Folie.

Es ist ferner möglich, eine Lösung des Kunststoff-Formkörpers auf das Substrat aufzubringen, beispielsweise aufzustreichen, aufzusprühen oder aufzuschleudern, wobei sich dann nach dem Abdampfen des Lösungsmittels auf dem Substrat ein fest haftender Film des elastifizierten Kunststoffes ausbildet.

Entsprechende Kunststoff-Folien oder auf ein Substrat mit Hilfe eines Lösungsmittels aufgebrachte Filme aus dem elastifizierten Kunststoff, können mit Vorteil zu verschiedenen Verpackungszwecken angewandt werden. Wenn derartige Filme oder Folien in direktem Kontakt mit einem wässrigen Medium stehen, beispielsweise einem feuchten oder flüssigen Nahrungsmittelprodukt, dann ist es von besonderem Vorteil, dass die elastifizierende Komponente auch bei langer Lagerung nicht aus der Kunststoff-Folie austritt und so das Lebensmittel verunreinigt.

Mit Hilfe von erfindungsgemässen Kunststoff-Folien ist es ferner möglich, ein nicht haftfähiges Material an einem Substrat, beispielsweise aus Glas, Papier oder Kunststoff, zu befestigen. Zu diesem Zwecke wird auf das entsprechende Substrat zuerst das nicht haftfähige Material, beispielsweise eine Folie aus Papier oder einem Kunststoffmaterial, aufgelegt und über dieses nicht haftfähige Material wird dann ein flächenmässig grösseres Stück einer erfindungsgemässen elastischen, haftfähigen Folie gelegt, beispielsweise in leicht gedehntem Zustand aufgebracht. Dabei wird an denjenigen Stellen, wo die erfindungsgemässe haftfähige Folie in direktem Kontakt mit dem Substrat steht, eine Haftung der erfindungsgemässen Folie an diesem erreicht, und an denjenigen Stellen, wo sich zwischen der erfindungsgemässen Folie und dem Substrat die Folie aus dem nicht haftfähigen Material befindet, die erfindungsgemässe Folie an dieser Folie befestigt und diese an dem Substrat festgepresst, so dass eine ausreichend dauerhafte Befestigung der nicht haftenden Folien erreicht wird. Die nicht haftende Folie kann beispielsweise bedruckt oder beschriftet sein, so dass somit eine gleichzeitige Bezeichnung und Verpackung von Produkten erreicht werden kann.

Bevorzugte erfindungsgemässe Formkörper sind,

wie bereits erwähnt wurde, ionenempfindliche Membranen zur Bestimmung der Konzentration von Kationen oder Anionen. Derartige Membranen enthalten zusätzlich zu dem Kunststoff und dem Benzophenontetracarbonsäure-tetraester noch eine ionenselektive Komponente, die gegenüber dem Ion, das bestimmt werden soll, selektiv ist. Viele derartige ionenselektive Komponenten sind in der Literatur beschrieben und als Beispiel sei auf die kationenselektiven Komponenten verwiesen, die in der USA Patentschrift 2 957 607 genannt sind. In derartigen ionenselektiven Membranen ist die ionenselektive Komponente im allgemeinen vollständig in dem dort eingesetzten Weichmacher gelöst.

Wie bereits weiter vorne klargelegt wurde, sind die Weichmacher, die in derartigen ionenempfindlichen Membranen bisher eingesetzt wurden, bestimmte Äther, sowie ferner Ester von Dicarbonsäuren oder Ester von Phosphorsäuren. Es wurde nun völlig unerwartet gefunden, dass die elastifizierende Komponente der erfindungsgemässen Formkörper, nämlich die Benzophenontetracarbonsäure-tetraester zu vielen unerwarteten Vorteilen führen, wenn die erfindungsgemässen Formkörper derartige ionenempfindliche Membranen sind und wenn die Benzophenontetracarbonsäure-tetraester in diesen Membranen an Stelle der Weichmacher eingesetzt wurden, die bisher zu diesem Zweck verwendet wurden.

Wie bereits weiter vorne erläutert wurde, muss jede der vielen Alkoholgruppierungen der in den erfindungsgemässen Kunststoff-Formkörpern eingesetzten Benzophenon-tetracarbonsäure-tetraester 4 - 24 Kohlenstoffatome, vorzugsweise 6 - 20 Kohlenstoffatome, und speziell bevorzugt, 9 - 19 Kohlenstoffatome, aufweisen und ausserdem leiten sich diese Alkoholgruppierungen vorzugsweise von geradkettigen Alkoholen ab. Dementsprechend verleihen diese langen aliphatischen Ketten der erfindungsgemässen Benzophenontetracarbonsäure-tetraester den Estern lipophile Eigenschaften. Ausserdem vermindern diese langen aliphatischen Ketten die dynamische Viskosität der Benzophenontetracarbonsäuretetraester aufgrund der grossen Molekülmasse dieser Substanzen und aufgrund von Wechselwirkungen zwischen den langen aliphatischen Ketten.

Diese langen aliphatischen Ketten führen ferner zu einer stark verminderten Beweglichkeit der Benzophenontetracarbonsäure-tetraester in dem Polymergrundgerüst der Kunststoffkomponente der erfindungsgemässen Kunststoff-Formkörper, weil die langen aliphatischen Ketten der Ester sich zwischen die Polymerketten lagern und offensichtlich Verwicklungen zwischen den langen aliphatischen Ketten der Tetraester und den Polymerketten auftreten. Durch diese Verwicklungen wird offenbar auch die Beweglichkeit der ionenselektiven Komponente in derartigen Systemen aus Polymergrundgerüst plus Benzophenontetracarbonsäure-tetraester plus ionenselektive Komponente drastisch verringert. Entsprechende Tests wurden mit Membranen durchgeführt, die als ionenselektive Komponente das N,N'-Bis[(11-äthoxycarbonyl)undecyl]N,N'-dimethyl-2,3-naphthalindioxydiacetamid enthalten, das in der Veröffentlichung von D. Amman, R. Bissig, M. Güggi, E. Pretsch, W. Simon, I.J. Borowitz und L. Weiss in Helv. Chim. Acta 58 (1975) 1535 beschrieben ist. In entsprechenden Membranen, in welchen der Kunststoff Polyvinylchlorid ist und die ferner die angegebene ionenempfindliche Komponente enthalten, ist die Beweglichkeit dieser ionenempfindlichen Komponente drastisch vermindert, wenn ein Benzophenontetracarbonsäure-tetraester als elastifizierende Komponente in entsprechenden ionenempfindlichen Membranen eingesetzt wird, und zwar im Vergleich zu entsprechenden Membranen zu Vergleichszwecken, welche die gleiche ionenempfindliche Komponente in einer Polyvinylchloridpolymermatrix enthalten, jedoch in Kombination mit dem zum Stand der Technik gehörenden Weichmacher Sebacinsäure-2-äthyl-hexylester[Bis(2-äthyl hexyl)-sebacinat]. Ionenempfindliche Elektroden, die mit den erfindungsgemässen Membranen und mit den angeführten Membranen zu Vergleichszwecken ausgestattet waren, wurden ebenfalls getestet und es zeigte sich dabei, dass die Lebensdauer der Elektroden, in denen die oben erwähnte erfindungsgemässe ionenselektive Membran eingesetzt wurde, etwa das Zehnfache betrug von entsprechenden Elektroden, die mit der oben erwähnten ionenselektiven Membran zu Vergleichszwecken ausgestattet waren.

Die stark verminderte Mobilität der ionenselektiven Komponente in solchen ionenselektiven Membranen ist dort besonders vorteilhaft, wo ganz kleine, mehrere Ionen testende Systeme eingesetzt werden, weil in diesen miniaturisierten Systemen Bereiche, die für verschiedene Arten an Ionen empfindlich sind, in naher Umgebung angeordnet sind. Ein Nachteil derartiger Systeme ist derjenige, dass eine wechselweise Verunreinigung der einzelnen Bereiche mit den ionenempfindlichen Komponenten der benachbarten Bereiche auftreten kann, weil bei einem derartigen Sensor in der Membranbeschichtung die ionenempfindlichen Komponenten der einzelnen Bereiche ineinander diffundieren können. Dadurch, dass die in den entsprechenden erfindungsgemässen Systemen vorhandenen Benzophenontetracarbonsäureester diese Beweglichkeit der ionenempfindlichen Komponenten in den einzelnen Membranabschnitten vermindern, kann eine derartige wechselweise Verunreinigung praktisch vollständig verhindert werden.

Es wurde ferner festgestellt, dass trotz der Hemmung der Beweglichkeit und Diffusion von grossen Molekülen, wie zum Beispiel den ionenempfindlichen Komponenten, in erfindungsgemässen ionenempfindlichen Membranen, die als elastifizierende Komponente Dibenzophenontetracarbonsäure-tetraester enthalten, die Diffusion von kleinen Molekülen, wie zum Beispiel Kohlendioxid, nicht behindert wird. Aus diesem Grund ist es möglich, ionenempfindliche Membranen unter Verwendung dieser elastifizierenden Komponente herzustellen, welche die Bestimmung von Kohlendioxid ermöglichen. Derartige ionenempfindliche Membranen können beispielsweise diejenigen ionenempfindlichen Komponenten enthalten, die in der Veröffentlichung von J.W. Ross, J.H. Riseman und J.A. Krüger in Pure Appl. Chem. 36 (1973) 473, mit dem Titel «Potentiometric gas sensing electrodes» beschrieben sind. Ferner können auch entsprechende ionenempfindliche Membranen hergestellt werden, die als ionenempfindliche

Komponente eine für Bikarbonatanionen empfindliche Komponente enthalten. Beispielsweise werden für Bikarbonationen empfindliche Komponenten in der Veröffentlichung von U. Oesch, E. Malinowska und W. Simon, mit dem Titel «Bicarbonate-sensitive electrode based on planar thin memorane technology», Analytical Chemistry 59 (1987) pp. 2131-2135 beschrieben. Auch die Bikarbonatanionen diffundieren durch erfindungsgemässe ionenempfindliche Membranen rasch genug um eine Bestimmung dieser Anionen in wässrigen Systemen zu ermöglichen. Das gleiche trifft auch für Sauerstoff zu und dementsprechend können die erfindungsgemässen ionenempfindlichen Membranen zusätzlich zu der Polymermatrix und dem Benzophenontetracarbonsäure-tetraester als elastifizierender Komponente noch eine entsprechende ionenempfindliche Komponente enthalten, welche die Bestimmung von Sauerstoff ermöglicht, beispielsweise die Bestimmung von Sauerstoff in Körperflüssigkeiten, wie zum Beispiel Blutserum.

Ein weiterer Vorteil solcher erfindungsgemässer haftfähiger Membranen, die als weiteren Bestandteil eine ionenselektive Komponente enthalten, besteht darin, dass derartige Membranen auf einen Elektrodenkörper, beispielsweise aus Glas oder silanisiertem Glas aufgebracht werden können, und dass sie dann an dem Elektrodenkörper ausreichend fest haften, so dass sie durch Reiben mit dem Finger nicht davon entfernt werden. Wenn bei der Verwendung derartiger Elektroden zur Bestimmung der Konzentration entsprechender Kationen diese Membranen mit einem flüssigen Medium in Berührung gebracht werden, dann lösen sich die entsprechenden Kunststoff-Folien von dem Elektrodenkörper nicht ab.

Bevorzugte Substrate, beispielsweise Elektrodenkörper, auf welche erfindungsgemässe Kunststoff-Formkörper mit hoher Elastizität und Haftfähigkeit aufgebracht werden können, sind Substrate aus Kunststoffen, beispielsweise Poly(methylmethacrylat) oder Poly(vinylchlorid), oder Silizium enthaltende Substrate, vorzugsweise Glassubstrate, Quarzglassubstrate, Substrate aus silanisiertem Glas, Substrate aus Silikon oder Substrate aus Siliziumnitrid der Formel $Si_3N_4$. Auf allen diesen Substraten weisen die erfindungsgemässen Kunststoff-Formkörper eine gute Haftung auf.

Die Erfindung sei nun anhand von Beispielen näher erläutert:

*Beispiel 1*

*Herstellung eines Benzophenontetracarbonsäure-tetraesters*

Anhand dieses Beispiels wird die Herstellung eines Benzophenontetracarbonsäure-tetraesters der Formel I

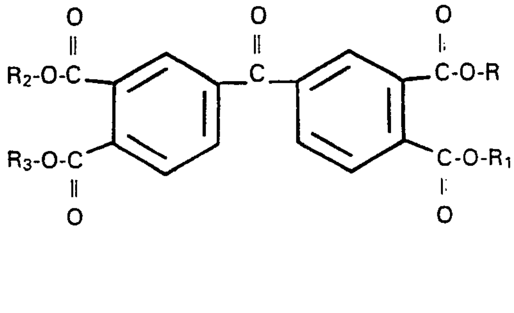

(I)

erläutert, wobei in dieser Formel jeder der Reste R, $R_1$, $R_2$ und $R_3$ die Bedeutung eines geradkettigen Alkylrestes mit 11 Kohlenstoffatomen aufweist.

Zu einer Lösung von 5 g (0,0155 Mol) an 3, 3', 4, 4'-Benzophenon-tetracarbonsäure-dianhydrid und 10,96 g (0,0636 Mol) an 1-Hydroxyundekan in 100 ml Toluol, gibt man 1 g Schwefelsäure, gelöst in einer geringen Menge an Toluol unter Rühren bei Zimmertemperatur zu. Nachdem die gesamte Menge an Schwefelsäure zugesetzt worden war, wurde die Mischung vier Stunden lang unter Rückfluss gekocht und das bei der Veresterungsreaktion abgespaltete Wasser wurde dabei aus der Rückflusskolonne abgetrennt.

Anschliessend wurde das Lösungsmittel abgedampft, der Rückstand in Chloroform gelöst und die organische Phase mit Wasser und zweimal mit einer 10%igen wässrigen Natriumbicarbonatlösung gewaschen.

Nach dem Abdampfen des Chloroforms erhielt man 13,8 g (entsprechend 91 % der Theorie) an dem rohen Benzophenontetracarbonsäure-tetraester. Dieser wurde durch Flashchromatographie (35 kPa) auf Silikagel 60 (Teilchengrösse entsprechend einer lichten Maschenweite von 230 - 400 mesh ASTM) gereinigt, wobei als Laufmittel eine Mischung aus einem Volumenteil Essigsäureäthylester und vier Volumenteilen Hexan verwendet wurde.

Die Elementaranalyse ergab für das erhaltene Produkt der Summenformel $C_{16}H_{98}O_9$ (Molgewicht 974,45) die folgenden Werte:

| | | |
|---|---|---|
| berechnet: | C = 75,11 | H = 10,13 |
| gefunden: | C = 75,12 | H = 10,13. |

Das Infrarotspektrum, aufgenommen in Tetrachlorkohlenstoff zeigte Peaks bei 1730 (Aryl-COO, st.) und 1670 (Aryl-CO-aryl, st.).

Die Viskosität betrug 902,5 mPa.s bei 22°C.

*Beispiel 2*

Es wurde ein Benzophenoncarbonsäureester hergestellt, der ebenfalls der Formel I gemäss Beispiel 1 entspricht, wobei jedoch in diesem Fall jeder der Reste R, $R_1$, $R_2$ und $R_3$ ein geradkettiger Alkylrest mit 6 Kohlenstoffatomen war.

Die Herstellung erfolgte nach dem in Beispiel 1 beschriebenen Verfahren, wobei jedoch anstelle des 1-Hydroxyundekanes eine äquivalente Menge an dem 1-Hydroxyhexan verwendet wurde.

*Beispiel 3*

In diesem Beispiel wurden aus Polyvinylchlorid und dem nach dem Verfahren gemäss Beispiel 1 hergestellten Benzophenoncarbonsäure-tetraester Membranen hergestellt. Zu diesem Zweck wurde eine entsprechende Menge des Polyvinylchlorides und des Benzophenoncarbonsäure-tetraesters in einer ausreichenden Menge aus Tetrahydrofuran gelöst und diese Lösung wurde zu Membranen einer Dicke von etwa 100 μm vergossen.

Es wurden Membranen mit unterschiedlichen Gehalten an dem Benzophenontetracarbonsäure-tetraester hergestellt. Die eingesetzten Mengen an Polyvinylchlorid und dem Tetracarbonsäure-tetraester

sind in Gew.-% in der nachfolgenden Tabelle angeführt.

| Membran | Gew.-Teile Polyvinylchlorid | Gew.-Teile Benzophenontetracarbonsäure-tetraester |
|---|---|---|
| A | 10 | 90 |
| B | 30 | 70 |
| C | 40 | 60 |
| D | 54 | 46 |

Bei der Folie D handelt es sich um eine Folie zu Vergleichszwecken, weil in ihr pro 10 Gew.-Teile Kunststoff, weniger als 12 Teile Benzophenontetracarbonsäure-tetraester enthalten sind.

Jede der Folien A, B, C und D wurde bezüglich ihrer Haftfestigkeit auf Substraten aus Glas, Quarzglas und Plexiglas getestet. Auf die entsprechenden Substrate wurde jeweils die zu testende Folie in leicht gestrecktem Zustand aufgebracht.

Sämtliche Folien blieben auf den drei Substraten nach der Aufbringung haften. Wenn man jedoch anschliessend über die Stelle, wo die Folien aufgebracht waren, mit dem Finger rieb, dann wurden durch diese Behandlung die Folien A, B und C nicht abgeschält, jedoch löste sich unter diesen Bedingungen die Folie zu Vergleichszwecken D.

Mit dem Messer konnten alle Folien, A, B, C und D von sämtlichen Substraten wieder abgekratzt werden. Daraus sieht man, dass entsprechende erfindungsgemässe Folien, falls dies erwünscht ist, von einem Substrat auch wieder entfernt werden können, sich jedoch unter den Arbeitsbedingungen nicht von dem Substrat lösen.

Von den hier getesteten Folien zeigte die Folie B die besten Resultate bezüglich der Reissfestigkeit.

*Beispiel 4*

Anhand dieses Beispieles wurde die Auswaschbarkeit des Weichmachers, bzw. elastifizierenden Mittels aus einer Folie aus hochmolekularem Polyvinylchlorid (ein entsprechendes Produkt der Firma Fluka) getestet. Es wurden Folien hergestellt, die aus 70 Gew.-Teilen des Weichmachers, bzw. elastifizierenden Mittels und 300 Gew.-Teilen Polyvinylchlorid zusammengesetzt waren.

Es wurden die folgenden Weichmacher getestet:

*Folie I:*

Der nach dem Verfahren gemäss Beispiel 1 hergestellte Benzophenontetracarbonsäure-tetraundecylester, abgekürzt als BT-11.

*Folie II:*

Der nach dem Verfahren gemäss Beispiel 2 hergestellte Benzophenon-tetracarbonsäure-tetrahexylester, abgekürzt als BT-6.

*Folie III:*

Sebacinsäuredioctylester (Dioctyl-Sebacat), abgekürzt als DOS.

*Folie IV:*

ortho-Nitrophenyl-octyläther, abgekürzt als o-NPOE.

Bei den Folien I und II handelt es sich um erfindungsgemässe Formkörper. Bei den Folien III und IV handelt es sich um Folien zu Vergleichszwecken, bei denen bisher häufig verwendete Weichmacher als elastifizierende Mittel eingesetzt wurden, und zwar Weichmacher, die insbesondere häufig als weichmachende Komponente von ionenempfindlichen Membranen, also solchen eingesetzt werden, die zusätzlich zu dem Kunststoff und dem Weichmacher noch eine Komponente enthalten,die gegenüber dem zu bestimmenden Kation selektiv ist.

Die Membranen I, II, III und IV wurden in eine wässrige Albuminlösung eingebracht, die 70 g Albumin pro Liter enthielt. Dabei wurde jeweils eine solche Menge an Albuminlösung verwendet, dass pro Volumenteil Folie 1000 Volumenteile der Albuminlösung vorhanden waren. Die in der Albuminlösung befindlichen Folien hatten jeweils eine Dicke von 100 µm und sie wurden in der Lösung fünf Tage lang bei Zimmertemperatur auf einer Schüttelmaschine geschüttelt. Nach dieser Behandlung wurden die Folien mit Wasser gewaschen und dann auf ihren Gehalt an Weichmachern, bezogen auf die ursprüngliche Weichmachermenge, getestet. Die Menge an Weichmacher, die jede der Folien vor der Behandlung mit der Albuminlösung enthielt (also der Weichmachergehalt von 70%, bezogenn auf das Gesamtgewicht der Folie), wurde mit 100% festgesetzt. In der nachfolgenden Tabelle sind die Prozent Weichmacher nach der Extraktionsbehandlung mit der Albuminlösung, bezogen auf 100% des ursprünglichen Weichmachers, angegeben.

| Folie | % der ursprünglichen Weichmachermenge, die nach der Behandlung in der Folie enthalten war |
|---|---|
| I | 99,8 |
| II | 98,5 |
| III | 70,5 |
| IV | 43,9 |

Aus diesen Ergebnissen sieht man, dass die in den erfindungsgemässen Folien eingesetzten Weichmacher, dann wenn sie in Mengen von 70 Gew.-%, bezogen auf das Gesamtgewicht der Folie, eingesetzt werden, von den wässrigen Lösungen kaum ausgewaschen werden. Der Test zeigt ferner, dass der Benzophenontetracarbonsäure-tetraester der Formel I, in welchem jeder der Reste R, $R_1$, $R_2$ und $R_3$ 11 Kohlenstoffatome aufweist, in einem noch geringeren Ausmass ausgelaugt wird, nämlich nur zu 0,2%, bezogen auf den anfänglich anwesenden Weichmacher, als diejenige elastifizierende Komponente der Formel I, in welcher jeder der Reste R, $R_1$, $R_2$ und $R_3$ ein geradkettiger Alkylrest mit 6 Kohlenstoffatomen ist. Im zuletzt genannten Fall betrug die Auslaugung 1,5 Gew.-%, bezogen auf die ursprünglich anwesende Menge der elastifizierenden Komponente.

Im Gegensatz dazu wurden bei Verwendung bisher üblicher Weichmacher unter den gleichen Bedingungen mehr als 30 Gew.-%, bzw. sogar mehr als 50

Gew.-%, des ursprünglich anwesenden Weichmachers ausgewaschen.

*Beispiel 5*

In diesem Beispiel wurden die erfindungsgemässen Folien I des Beispiels 4 und die Folien zu Vergleichszwecken III des Beispiels 4 bezüglich der Migration des Weichmachers getestet. Bei diesem Test wurden sie mit wesentlich dickeren Polyvinylchloridschläuchen in Berührung gebracht.

Die Folien I enthielten, wie bereits erwähnt wurde, 70% des Benzophenontetracarbonsäure-tetraundecylesters und 30 Gew.-% Polyvinylchlorid, die Folien III zu Vergleichszwecken enthielten 70 Gew.-% des Sebacinsäuredioctylesters und 30 Gew.-% Polyvinylchlorid.

Als Polyvinylchloridschlauch wurde ein solcher verwendet, wie er im Handel erhältlich ist. Diese Polyvinylchloridschläuche sind wesentlich dicker als die getesteten Folien und entsprechende Schläuche, auf die eine ionenempfindliche Membran aufgebracht ist, können als kathederartige Elektroden zur Bestimmung von Ionen, beispielsweise im Blut herangezogen werden. Entsprechende Polyvinylchloridschläuche enthalten Weichmacher und ein wesentlicher Nachteil bisher bekannter derartiger kathederartiger Elektroden bestand darin, dass ihre Lebensdauer sehr begrenzt war, weil der Weichmacher aus dem Polyvinylchloridschlauch in die ionenempfindliche Membran einwanderte und andererseits der Weichmacher der ionenempfindlichen Membran in den Polyvinylchloridschlauch einwanderte.

Mit dem vorliegenden Test sollte überprüft werden, ob bei erfindungsgemässen Membranen die als elastifizierende Komponente Benzophenontetracarbonsäure-tetraester enthalten, die Migrationsprobleme der jeweiligen Weichmacher vermieden werden können.

Die bei diesem Test verwendeten Polyvinylchloridschläuche enthielten 36,6%, bezogen auf das Gesamtgewicht des Schlauches an dem Weichmacher Diäthylhexylphthalat, abgekürzt als DEHP, und 73,4 Gew.-%, bezogen auf das Gesamtgewicht des Schlauches, an Polyvinylchlorid.

Bei diesem Test wurden die Folien I, bzw. III auf den Polyvinylchloridschlauch aufgelegt und darauf festgepresst und es wurde nach einer bestimmten Kontaktzeit festgestellt, wir stark die Wanderung des Weichmachers aus der Folie in den Polyvinylchloridschlauch, bzw. des Weichmachers des Polyvinylchloridschlauches in die Folie war.

Bei diesem Test zeigte sich, dass bei Verwendung der erfindungsgemässen Folie I nach einer Kontaktzeit mit dem Polyvinylchloridschlauch von 9480 Minuten nur eine äusserst geringfügige Migration des Weichmachers BT-11 der erfindungsgemässen Folien in den Polyvinylchloridschlauch und ausserdem auch nur eine äusserst geringfügige Migration des Weichmachers DEHP des Polyvinylchloridschlauches in die Folie stattgefunden hatte.

Im Gegensatz dazu konnte bei den Folien zu Vergleichszwecken III bereits nach einer Kontaktzeit von 237 Minuten eine deutliche Migration des Weichmachers DOS der Folie in den Polyvinylchloridschlauch und auch des Weichmachers DEHP des Polyvinylchloridschlauches in die Folie zu Vergleichszwecken festgestellt werden.

**Patentansprüche**

1. Kunststoff-Formkörper mit hoher Elastizität und Haftfähigkeit, dadurch gekennzeichnet, dass er pro 10 Gew.-Teile Kunststoff 7 Gew.-Teile bis zu 90 Gew.-Teile einer elastifizierenden Komponente enthält, die ein Benzophenontetracarbonsäure-tetraester ist, in welchem die veresternden Alkoholkomponenten Alkanole, Alkenole oder Alkinole mit 4 bis 24 Kohlenstoffatomen sind und wobei der Benzophenontetracarbonsäureester in den aromatischen Ringen oder in den Resten der Alkoholkomponenten gegebenenfalls nicht ionische Substituenten trägt, unter der Voraussetzung, dass dann, wenn der Kunststoff ein Vinylchloridhomopolymerisat oder Vinylchloridcopolymerisat enthält oder daraus besteht, pro 10 Gew.-Teile Kunststoff mehr als 12 Gew.-Teile des Benzophenontetracarbonsäure-tetraesters enthalten sind.

2. Kunststoff-Formkörper nach Anspruch 1, dadurch gekennzeichnet, dass die Alkoholkomponente des Benzophenontetracarbonsäure-tetraesters ein geradkettiger Alkohol oder ein nur eine Verzweigungsstelle aufweisender Alkohol ist.

3. Formkörper nach Anspruch 1 oder 2, dadurch gekennzeichnet, dass in dem Benzophenontetracarbonsäureester jeder der beiden Benzolringe zwei Estergruppierungen trägt, wobei in den beiden Benzolkernen die Anordnung der Estergruppierungen vorzugsweise identisch, bezogen auf die Carbonylgruppe des Benzophenones ist.

4. Formkörper nach Anspruch 3, dadurch gekennzeichnet, dass der Benzophenoncarbonsäureester die folgende Formel I

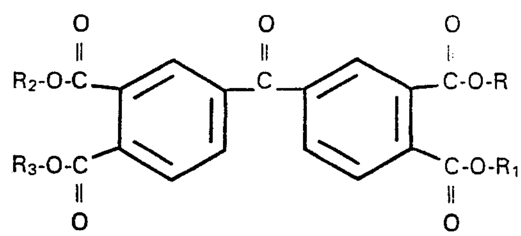

(I)

aufweist, wobei jeder der Reste R, $R_1$, $R_2$ und $R_3$ ein Alkylrest, Alkenylrest oder Alkinylrest mit 4 bis 22 Kohlenstoffatomen, vorzugsweise 6 bis 20 Kohlenstoffatomen, ist und wobei vorzugsweise die Reste R, $R_1$, $R_2$, bzw. $R_3$ geradkettig sind oder höchstens eine Verzweigungsstelle aufweisen.

5. Formkörper nach einem der Ansprüche 1 bis 4, dadurch gekennzeichnet, dass in dem Benzophenontetracarbonsäure-tetraester die vier Estergruppierungen die gleiche Struktur besitzen.

6. Formkörper nach einem der Ansprüche 1 bis 5, dadurch gekennzeichnet, dass der Kunststoff ein Polyäthylen, ein Polypropylen, ein Polyvinylhalogenid, ein Polystyrol, ein Polyester, ein Polyamid, ein Polyacrylnitril, ein Polyurethan, ein Polycarbonat, ein Polyvinylidenhalogenid oder ein Copolymerisat aus zwei oder mehr Monomereinheiten ist, wobei in Copolymerisaten gegebenenfalls auch geringere Anteile an stärker hydrophilen Monomerkomponenten, beispielsweise Vinylalkohol, enthalten sein können.

7. Formkörper nach Anspruch 6, dadurch gekennzeichnet, dass der Kunststoff ein Vinylchloridhomopolymerisat oder Vinylchloridcopolymerisat ist und dass pro 10 Gew.-Teile dieses Kunststoffes 15 bis 90 Gew.-Teile, vorzugsweise 20 - 70 Gew.-Teile des Benzophenontetracarbonsäure-tetraesters anwesend sind.

8. Formkörper nach einem der Ansprüche 1 bis 7, dadurch gekennzeichnet, dass er in Form eines Fadens, eines Stranges, eines Filaments, einer Folie oder eines Filmes vorliegt, beispielsweise eines Filmes, der sich fest haftend auf der Oberfläche eines Substrates befindet.

9. Formkörper nach Anspruch 8, dadurch gekennzeichnet, dass er eine ionenempfindliche Membran zur Bestimmung der Ionenkonzentration von Kationen oder Anionen ist, wobei dieser Formkörper als weiteren Bestandteil eine ionenselektive Komponente für die zu bestimmenden Ionen enthält.

10. Formkörper nach Anspruch 9, dadurch gekennzeichnet, dass er eine ionenempfindliche Membran ist, die 10 Gew.-Teile an Polyvinylchlorid, 15 bis 90 Gew.-Teile, vorzugsweise 20 - 70 Gew.-Teile, an dem Benzophenontetracarbonsäure-tetraester und 0,1 - 1 Gew.-Teile an der ionenselektiven Komponente enthält.

11. Verwendung der Kunststoff-Formkörper mit hoher Elastizität und Haftfähigkeit gemäss Anspruch 1 zur Erzeugung einer haftenden Bindung zwischen dem Kunststoff-Formkörper und einem Substrat, dadurch gekennzeichnet, dass man den elastischen haftfähigen Kunststoff-Formkörper durch Anpressen an einem Substrat befestigt oder dass man eine Lösung der Komponenten des Kunststoff-Formkörpers in einem organischen Lösungsmittel auf ein Substrat aufträgt, wobei nach dem Abdampfen des Lösungsmittels eine auf dem Substrat haftende Schicht des Formkörpers mit hoher Elastizität vorliegt.

12. Verwendung nach Anspruch 11, dadurch gekennzeichnet, dass man einen Kunststoff-Formkörper gemäss einem der Ansprüche 2 - 10 verwendet.

13. Verwendung nach Anspruch 11 oder 12, dadurch gekennzeichnet, dass man auf dem Substrat eine haftende Beschichtung aus dem Kunststoff-Formkörper mit hoher Elastizität herstellt, indem man

(a) entweder einen entsprechenden elastischen folienförmigen Formkörper auf die Oberfläche eines Substrates in ungedehntem oder in gedehntem Zustand aufbringt, wobei eine dauerhafte Haftung des folienförmigen Materials auf dem Substrat gewährleistet wird, oder

(b) dass man eine Lösung der Komponenten des Kunststoff-Formkörpers mit hoher Elastizität und Haftfähigkeit in einem organischen Lösungsmittel auf das Substrat aufbringt oder aufschleudert, wobei sich nach dem Abdampfen des Lösungsmittels ein auf dem Substrat fest haftender Film des elastischen Kunststoffes ausbildet.

14. Verwendung nach einem der Ansprüche 11 bis 13, dadurch gekennzeichnet, dass das Substrat, auf welchem Kunststoff-Formkörper mit hoher Elastizität und Haftfähigkeit aufgebracht werden, ein Substrat ist, das aus einem Kunststoff besteht, beispielsweise Poly(methylmethacrylat) oder Poly(vinylchlorid), oder dass das Substrat ein Silizium enthalterndes Substrat ist, vorzugsweise ein Glassubstrat, ein Quarzglassubstrat, ein Substrat aus silanisiertem Glas, ein Substrat aus Silikon oder ein Substrat aus Siliziumnitrid der Formel $Si_3N_4$.

15. Verwendung nach einem der Ansprüche 11 bis 14, dadurch gekennzeichnet, dass man eine ionenempfindliche Elektrode zur Bestimmung der Konzentration von Anionen oder Kationen herstellt, indem man auf einen entsprechenden Elektrodenkörper eine Membran aus dem elastischen haftfähigen Kunststoff-Formkörper aufbringt, wobei diese Membran als weitere Komponente eine für die zu bestimmenden Anionen oder Kationen ionenselektive Komponente enthält.

## Claims

1. A shaped plastic article of high elasticity and adhesiveness, characterized in that it contains, per 10 parts by weight of plastic, 7 parts by weight to 90 parts by weight of an elasticizing component, namely a benzophenonetetracarboxylic acid tetraester in which the esterifying alcohol components are alkanols, alkenols or alkynols having 4 to 24 carbon atoms, it being possible for the benzophenonetetracarboxylic acid ester to carry non-ionic substituents in the aromatic rings or in the radicals of the alcohol components, with the proviso that if the plastic contains a vinyl chloride homopolymer or vinyl chloride copolymer or consists of one of these, the said shaped plastic article contains more than 12 parts by weight of the benzophenonetetracarboxylic acid tetraester per 10 parts by weight of plastic.

2. A shaped plastic article according to Claim 1, characterized in that the alcohol component of the benzophenonetetracarboxylic acid tetraester is a straight-chain alcohol or an alcohol having only one branch point.

3. A shaped article according to Claim 1 or Claim 2, characterized in that, in the benzophenonetetracarboxylic acid ester, each of the two benzene rings carries two ester groups, the arrangement of the ester groups relative to the carbonyl group of the benzophenone preferably being identical in both the benzene rings.

4. A shaped article according to Claim 3, characterized in that the benzophenonecarboxylic acid ester has the following formula I

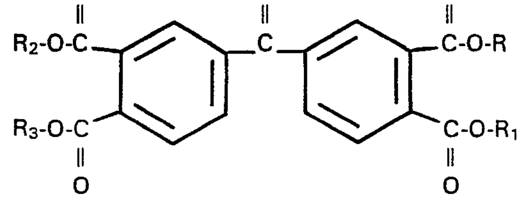

(I)

in which each of the radicals R, $R_1$, $R_2$ and $R_3$ is an

alkyl radical, alkenyl radical or alkynyl radical having 4 to 22 carbon atoms, preferably 6 to 20 carbon atoms, and in which the radicals R, $R_1$, $R_2$ and $R_3$ are preferably straight-chain or have at most one branch point.

5. A shaped article according to any one of Claims 1 to 4, characterized in that the four ester groups in the benzophenonetetracarboxylic acid tetraester have the same structure.

6. A shaped article according to any one of Claims 1 to 5, characterized in that the plastic is a polyethylene, a polypropylene, a polyvinyl halide, a polystyrene, a polyester, a polyamide, a polycrylonitrile, a polyurethane, a polycarbonate, a polyvinylidene halide or a copolymer of two or more monomer units, it also being possible for copolymers to contain smaller proportions of more strongly hydrophilic monomer components, for example vinyl alcohol.

7. A shaped article according to Claim 6, characterized in that the plastic is a vinyl chloride homopolymer or vinyl chloride copolymer and in that 15 - 90 parts by weight, preferably 20 - 70 parts by weight, of the benzophenonetetracarboxylic acid tetraester are present per 10 parts by weight of this plastic.

8. A shaped article according to any one of Claims 1 to 7, characterized in that it is in the form of a thread, a strand, a filament, a sheet or a film, for example a film adhering firmly to the surface of a substrate.

9. A shaped article according to Claim 8, characterized in that it is an ion-sensitive membrane for determining the concentration of cations or anions, this shaped article containing, as a further constituent, an ion-selective component for the ions to be determined.

10. A shaped article according to Claim 9, characterized in that it is an ion-sensitive membrane containing 10 parts by weight of polyvinyl chloride, 15 to 90 parts by weight, preferably 20 - 70 parts by weight, of the benzophenonetetracarboxylic acid tetraester and 0.1 to 1 part by weight of the ion-selective component.

11. Use of the shaped plastic articles according to Claim 1, of high elasticity and adhesiveness, for the production of an adhesive bond between the shaped plastic article and a substrate, characterized in that the elastic adhesive shaped plastic article is fixed to a substrate by being pressed on, or in that a solution of the components of the shaped plastic article in an organic solvent is applied to a substrate, leaving a layer of the shaped plastic article of high elasticity adhering to the substrate after evaporation of the solvent.

12. Use according to Claim 11, characterized in that a shaped plastic article according to any one of Claims 2 - 10 is used.

13. Use according to Claim 11 or Claim 12, characterized in that an adhesive coat of the shaped plastic article of high elasticity is produced either by

(a) applying an appropriate elastic shaped article in sheet form to the surface of a substrate in the unstretched or stretched state, ensuring permanent adhesion of the material in sheet form to the substrate, or by

(b) applying to the substrate, by whirler coating or some other means, a solution of the components of the shaped plastic article, of high elasticity and adhesiveness, in an organic solvent, a film of the elastic plastic, adhering firmly to the substrate, being formed after evaporation of the solvent.

14. Use according to any one of Claims 11 to 13, characterized in that the substrate to which shaped plastic articles of high elasticity and adhesiveness are applied is a substrate consisting of a plastic, for example polymethyl methacrylate or polyvinylchloride, or in that the substrate is a silicon-containing substrate, preferably a glass substrate, a quartz glass substrate, a substrate made of silanized glass, a substrate made of silicone or a substrate made of silicon nitride of the formula $Si_3N_4$.

15. Use according to any one of Claims 11 to 14, characterized in that an ion-sensitive electrode for determining the concentration of anions or cations is produced by applying a membrane of the elastic adhesive shaped plastic article to the body of an appropriate electrode, this membrane containing, as a further component, an ion-selective component for the anions or cations to be determined.

## Revendications

1. Corps moulé en matière synthétique d'une haute élasticité et d'une forte adhérence, caractérisé en ce que, pour 10 parties en poids de matière synthétique, il contient 7 à 90 parties en poids d'un composant élastifiant qui est un tétra-ester d'un acide benzophénone-tétracarboxylique dans lequel des composants alcools estérifiants sont des alcanols, des alcénols ou des alcinols contenant 4 à 24 atomes de carbone, l'ester d'acide benzophénone-tétracarboxylique comportant, dans les noyaux aromatiques ou dans les radicaux des composants alcools, des substituants éventuellement non ioniques, en supposant que, dans ce cas, lorsque la matière synthétique contient ou est constituée d'un homopolymère de chlorure de vinyle ou d'un copolymère de chlorure de vinyle, pour 10 parties en poids de la matière synthétique, il y a plus de 12 parties en poids du tétra-ester d'acide benzophénone-tétracarboxylique.

2. Corps moulé en matière synthétique selon la revendication 1, caractérisé en ce que le composant alcool du tétra-ester d'acide benzophénone-tétracarboxylique est un alcool à chaîne droite ou un alcool ne comportant qu'une position de ramification.

3. Corps moulé selon la revendication 1 ou 2, caractérisé en ce que, dans l'ester d'acide benzophénone-tétracarboxylique, chacun des deux noyaux benzène comporte deux groupements ester, la disposition des groupements ester dans les deux noyaux benzène étant, de préférence, identique, rapporté au groupe carbonyle de la benzophénone.

4. Corps moulé selon la revendication 3, caractérisé en ce que l'ester d'acide benzophénone-carboxylique répond à la formule I ci-aprés:

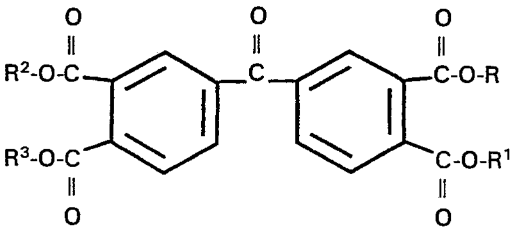

(I)

chacun des radicaux R, $R^1$, $R^2$ et $R^3$ étant un radical alkyle, un radical alcényle ou un radical alcynyle contenant 4 à 22 atomes de carbone, de préférence, 6 à 20 atomes de carbone tandis que, de préférence, les radicaux R, $R^1$, $R^2$ et $R^3$ sont à chaîne droite ou comportent, tout au plus, un point de ramification.

5. Corps moulé selon une des revendications 1 à 4, caractérisé en ce que, dans le tétra-ester d'acide benzophénone-tétracarboxylique, les quatre groupements ester ont la même structure.

6. Corps moulé selon une des revendications 1 à 5, caractérisé en ce que la matière synthétique est un polyéthylène, un polypropylène, un halogénure de polyvinyle, un polystyrène, un polyester, un polyamide, un polyacrylonitrile, un polyuréthane, un polycarbonate, un halogénure de polyvinylidène ou un copolymère constitué de deux motifs monomères ou plus, de plus faibles fractions des composants monomères plus fortement hydrophiles, par exemple, l'alcool vinylique, pouvant éventuellement être également contenues dans les copolymères.

7. Corps moulé selon la revendication 6, caractérisé en ce que la matière synthétique est un homopolymère de chlorure de vinyle ou un copolymère de chlorure de vinyle et en ce que, pour 10 parties en poids de cette matière synthétique, on a 15 à 90 parties en poids, de préférence, 20 à 70 parties en poids du tétra-ester d'acide benzophénone-tétracarboxylique.

8. Corps moulé selon une des revendications 1 à 7, caractérisé en ce qu'il se présente sous forme d'un fil, d'un boudin, d'un filament, d'une feuille mince ou d'une pellicule, par exemple, d'une pellicule qui adhère fermement à la surface d'un substrat.

9. Corps moulé selon la revendication 8, caractérisé en ce qu'il est une membrane ioniquement sensible en vue de déterminer la concentration ionique de cations ou d'anions, ce corps moulé contenant, comme constituant supplémentaire, un composé ioniquement sélectif pour les ions à déterminer.

10. Corps moulé selon la revendication 9, caractérisé en ce qu'il est une membrane ioniquement sensible contenant 10 parties en poids de chlorure de polyvinyle, 15 à 90 parties en poids, de préférence, 20 à 70 parties en poids du tétra-ester d'acide benzophénone-tétracarboxylique et 0,1 à 1 partie en poids du composant ioniquement sélectif.

11. Utilisation des corps moulés en matière synthétique d'une haute élasticité et d'une forte adhérence selon la revendication 1 pour la formation d'une liaison adhésive entre le corps moulé en matière synthétique et un substrat, caractérisée en ce qu'on fixe le corps moulé en matière synthétique adhérent et élastique par pressage sur un substrat ou en ce qu'on applique, sur un substrat, une solution des composants du corps moulé en matière synthétique dans un solvant organique tandis que, après avoir séparé le solvant par évaporation, on obtient une couche du corps moulé adhérant fermement sur le substrat et ayant une haute élasticité.

12. Utilisation selon la revendication 11, caractérisée en ce qu'on utilise un corps moulé en matière synthétique selon une des revendications 2 à 10.

13. Utilisation selon la revendication 11 ou 12, caractérisée en ce que, sur le substrat, on forme un enduit adhésif constitué du corps moulé en matière synthétique et ayant une haute élasticité:

(a) en appliquant un corps moulé élastique correspondant sous forme d'une feuille mince sur la surface d'un substrat à l'état non étiré ou étiré, tout en assurant une adhérence durable de la matière sous forme d'une feuille mince sur le substrat, ou

(b) on applique ou on centrifuge, sur le substrat, une solution des composants du corps moulé en matière synthétique d'une haute élasticité et d'une forte adhérence dans un solvant organique tandis que, après avoir séparé le solvant par évaporation, il se forme une pellicule de la matière élastique, adhérant fermement sur le substrat.

14. Utilisation selon une des revendications 11 à 13, caractérisée en ce que le substrat sur lequel est appliqué un corps moulé en matière synthétique d'une haute élasticité et d'une forte adhérence, est un substrat constitué d'une matière synthétique, par exemple, de méthacrylate de polyméthyle ou de chlorure de polyvinyle, ou en ce que le substrat est un substrat contenant du silicium, de préférence, un substrat en verre, un substrat en verre de quartz, un substrat en verre silanisé, un substrat de silicone ou un substrat de nitrure de silicium de formule $Si_3N_4$.

15. Utilisation selon une des revendications 11 à 14, caractérisée en ce qu'on réalise une électrode ioniquement sensible en vue de déterminer la concentration d'anions ou de cations en appliquant, sur un corps d'électrode correspondant, une membrane constituée du corps moule élastique et adhérent en matière synthétique, cette membrane contenant, comme composant supplémentaire, un composant ioniquement sélectif pour les anions ou les cations à déterminer.